# FASCICULE DE BREVET EUROPEEN

(11) **EP 1 670 963 B1**
(45) Date de publication et mention de la délivrance du brevet: **28.03.2018**
(21) Numéro de dépôt: 04787483.9
(22) Date de dépôt: 29.09.2004
(51) Int. Cl.: C22C 16/00, C22F 1/18

(54) **PROCEDE D' ELABORATION D'UN PRODUIT PLAT EN ALLIAGE DE ZIRCONIUM, PRODUIT PLAT AINSI OBTENU ET GRILLE DE REACTEUR DE CENTRALE NUCLEAIRE REALISEE A PARTIR DE CE PRODUIT PLAT**
VERFAHREN ZUR HERSTELLUNG EINES FLACHEN ZIRCONIUMLEGIERUNGSPRODUKTS, SO ERHALTENES FLACHES PRODUKT UND KERNKRAFTWERKSREAKTORGITTER AUS DEM FLACHEN PRODUKT
METHOD OF PRODUCING A FLAT ZIRCONIUM ALLOY PRODUCT, FLAT PRODUCT THUS OBTAINED AND A NUCLEAR PLANT REACTOR GRID WHICH IS MADE FROM SAID FLAT PRODUCT

(30) Priorité: 08.10.2003 FR 0311767
(43) Date de publication de la demande: 21.06.2006
(73) Titulaire: AREVA NP, 92400 Courbevoie (FR)
(72) Inventeur: BARBERIS, Pierre, 73400 Ugine (FR); SIMONOT, Claude, 69003 Lyon (FR)
(74) Mandataire: Lavoix
(86) Numéro de dépôt international: PCT/FR2004/002467
(87) Numéro de publication internationale: WO 2005/035817

(56) Documents cités:
- EP-A- 0 220 060
- EP-A- 0 559 096
- EP-A- 0 802 264
- WO-A-00/48199
- WO-A-01/24193
- WO-A-01/61062
- US-A- 4 212 686
- US-A- 4 992 240
- US-A- 5 256 216
- US-A- 5 487 797
- US-A- 5 560 790
- US-A- 5 985 211

## Description

L'invention concerne le domaine des produits plats (tôles et feuillards) en alliage de zirconium utilisés, notamment, pour fabriquer des éléments d'un réacteur de centrale nucléaire à eau légère.

Dans les réacteurs nucléaires à eau légère, les grilles en alliage de zirconium qui maintiennent les crayons (les tubes renfermant le combustible) forment des cellules dans lesquelles les crayons sont insérés et maintenus par des ensembles de moyens rigides et de moyens élastiques.

Ces grilles sont soumises à des phénomènes de croissance sous irradiation, sous l'effet desquels les dimensions des cellules se modifient au fil de l'utilisation du réacteur. Cette modification rend le maintien des crayons de plus en plus lâche, et les grilles finissent par ne plus jouer leur rôle de façon satisfaisante.

Il a été proposé dans le document EP-A-0 220 060 de réaliser ces grilles à partir d'un produit plat en alliage de zirconium entièrement recristallisé possédant une texture particulière. Cette texture est telle que les facteurs de Kearns mesurés selon la direction transversale et la direction longitudinale de la cellule, lorsque la grille est en place, sont combinés pour que l'irradiation de la grille au cours du fonctionnement du réacteur provoque une contraction de la cellule et non une augmentation de sa section. Ainsi, le serrage exercé par la grille sur les crayons tend à augmenter au lieu de diminuer.

Il faut noter que le document EP-A-0 220 060 ne propose pas de procédé permettant d'obtenir effectivement la texture recherchée. On connaît des procédés permettant d'obtenir cette texture, mais ils ne peuvent être utilisés en raison de problèmes majeurs de tenue à la corrosion du réacteur.

WO0048199 A1 décrit un procédé de fabrication des éléments minces plats, suivant lequel on constitue une ébauche en un alliage à base de zirconium contenant également, en poids, en plus des impuretés inévitables, 0,8 à 1,3 % de niobium, 500 à 2000 ppm d'oxygène, et 5 à 35 ppm de soufre et optionnellement jusqu'à 0,25 % de Fe+Cr+V et jusqu'à 300 ppm d'étain; on effectue une trempe bêta et un laminage à chaud pour obtenir une ébauche, on la lamine en au moins trois passes de laminage à froid avec des traitements thermiques intermédiaires de recuit et on exécute éventuellement une opération finale de recuit de recristallisation à une température inférieure à 620 °C pendant au plus 15 minutes.

Le but de l'invention est de proposer un procédé d'élaboration d'un produit plat, tôle ou feuillard, d'alliage de zirconium comportant notamment comme élément d'addition du niobium et pas nécessairement recristallisée à 100%, destinée notamment à la fabrication de grilles de réacteurs de centrales nucléaires à eau légère, résolvant les problèmes liés à la croissance sous irradiation du métal, tout en conservant des propriétés de tenue à la corrosion suffisantes.

A cet effet, l'invention a pour objet un procédé d'élaboration d'un produit plat en alliage de zirconium présentant un facteur de Kearns FT compris entre 0,30 et 0,70, caractérisé en ce que :
- on élabore un lingot d'alliage de zirconium de composition, en pourcentages pondéraux ;
   - Nb = 0,5 à 3,5%
   - Sn = 0 à 1,5%
   - Fe = 0 à 0,5%
   - Cr + V = 0 à 0,3%
   - S = 0 à 100ppm
   - O = 0 à 2000ppm
   - Si = 0 à 150ppm
le reste étant du zirconium et des impuretés résultant de l'élaboration
- on met en forme ledit lingot
- on exécute un ou plusieurs laminages à chaud dudit lingot mis en forme, pour obtenir un produit plat, le dernier desdits laminages à chaud étant exécuté entre (820-20xNb%)°C et 1100°C et n'étant suivi d'aucune opération de trempe depuis la phase α+β ou β
- on exécute éventuellement un recuit du produit plat à une température n'excédant pas 800°C ;
- on exécute un ou plusieurs cycles de laminage à froid et recuit du produit plat, lesdits recuits n'ayant pas lieu à plus de 800°C.

Dans un exemple de mise en oeuvre, la teneur en Nb de l'alliage est de 0,5 à 1,5%.

Ledit dernier laminage à chaud est exécuté de préférence à une température de ± 130°C autour de la température du transus α + β → β de l'alliage.

Ledit dernier laminage à chaud est exécuté de préférence entre 900 et 1030°C.

L'invention concerne également un produit plat d'alliage de zirconium présentant un facteur de Kearns FT compris entre 0,30 et 0,70, caractérisé en ce qu'il est obtenu par le procédé précédent.

L'invention concerne enfin une grille de maintien des crayons de combustible dans un réacteur de centrale nucléaire à eau légère, caractérisée en ce qu'elle est obtenue par mise en forme d'un produit plat du type précédent.

Comme on l'aura compris, l'invention consiste à élaborer un produit plat, qu'on peut qualifier de tôle ou de feuillard selon son épaisseur finale, présentant une excellente stabilité dimensionnelle sous irradiation dans le sens travers (par rapport à la direction de laminage). Cette stabilité dimensionnelle résulte de l'obtention, après l'élaboration du produit plat, d'une texture telle que le facteur de Kearns dans le sens travers FT soit supérieur ou égal à 0,30, dans la pratique compris entre 0,30 et 0,70, contre moins de 0,25 dans les procédés standard actuels et 0,4 à 0,5 dans le procédé de EP-A-0 220 060 qui, par ailleurs, exige un état entièrement recristallisé du produit plat, non nécessaire dans le cas de l'invention. De cette façon, si on découpe la tôle selon une direction judicieusement choisie pour constituer, après formage, la grille de réacteur selon l'invention, on obtient une grille présentant une excellente stabilité dimensionnelle sous irradiation dans la section des cellules de maintien des crayons. On évite ainsi à la fois des problèmes liés à un relâchement excessif du maintien des crayons ou, au contraire, à un serrage, à terme excessif, des crayons dans les cellules.

Ce résultat est obtenu par l'application à un alliage Zr-Nb (pouvant aussi contenir un ou plusieurs des éléments Sn, Fe, Cr, V, S, O et Si à des teneurs significatives) de traitements thermiques et thermomécaniques qui seront décrits plus loin.

On rappelle que le grandissement des grilles sous irradiation est lié à trois paramètres :
- la texture de la tôle ou du feuillard, sur laquelle on peut jouer pour obtenir un facteur de Kearns allant dans le sens d'un grandissement ou d'un rétrécissement suivant un axe privilégié (croissance libre) ; un facteur de Kearns inférieur à 0,33 dans une direction donnée correspond à une croissance libre donnant lieu à un grandissement dans cette même direction, et un facteur de Kearns supérieur à 0,33 correspond à une croissance libre donnant lieu à un rétrécissement ;
- la corrosion/oxydation qui va toujours dans le sens du grandissement ;
- l'hydruration qui va également dans le sens du grandissement.

Les traitements thermiques et thermomécaniques selon l'invention, en combinaison avec la composition de l'alliage auquel il sont appliqués, permettent de moduler le facteur de Kearns dans le sens travers FT de façon à ce que, compte tenu de la morphologie et des conditions d'utilisation futures de la grille (par exemple la température et la puissance linéique du réacteur dont elle fait partie), on n'observe qu'une croissance sous irradiation faible ou nulle.

Dans les cas où la corrosion/oxydation et/ou l'hydruration seront faibles, on aura intérêt à obtenir un FT proche de 0,33.

Dans les cas où la corrosion/oxydation et l'hydruration seront plus importantes, on aura intérêt à obtenir un FT plus élevé (jusqu'à 0,70) pour que la croissance sous irradiation résultant de ces phénomènes soit compensée par un rétrécissement par croissance libre résultant de la texture obtenue.

L'invention sera mieux comprise à la lecture de la description qui suit, donnée en référence aux figures annexées suivantes :
- la figure 1 qui montre à titre de référence des figures de pôles d'un échantillon de produit plat en alliage Zr-Nb à environ 1% de Nb ayant subi un dernier laminage à chaud à 780°C ;
- la figure 2 qui montre des figures de pôles d'un échantillon de produit plat en alliage Zr-Nb à environ 1% de Nb ayant subi un dernier laminage à chaud à 900°C selon l'invention.

Les alliages de zirconium auxquels l'invention s'applique contiennent (les pourcentages sont pondéraux) :
- de 0,5 à 3,5% de Nb, en particulier 0,5 à 1,5% ;
- 0 à 1,5% de Sn ;
- 0 à 0,5% de Fe ;
- Cr et/ou V, avec Cr + V 0-0,3%;
- éventuellement du soufre, jusqu'à 100ppm ;
- éventuellement de l'oxygène, jusqu'à 2000ppm ;
- éventuellement du silicium, jusqu'à 150ppm ;
- et les impuretés inévitables résultant de l'élaboration.

Selon l'invention, après élaboration et mise en forme d'un lingot présentant la composition précitée, on exécute un ou plusieurs laminages à chaud. Ce laminage à chaud (le dernier d'entre eux s'il y en a plusieurs) doit avoir lieu alors que l'alliage de zirconium est dans l'un des domaines α + β ou β, et plus précisément selon l'invention, entre une température minimale qui est fonction de la teneur en Nb de l'alliage et 1100°C. La température minimale pour ce dernier laminage à chaud est égale (en °C) à 820-(20xNb)%, en vue de se procurer une bonne marge de manoeuvre. En particulier, on s'assure ainsi que l'ensemble du produit à laminer se trouvera bien en permanence à une température convenable lors du laminage. De préférence cette température du dernier laminage à chaud est située à ± 130°C autour du transus α + β → β; la plage de températures optimale est le plus souvent de 900 à 1030°C. Le taux de réduction de ce dernier laminage à chaud est typiquement compris entre 50 et 95%.

Il est impératif que ce dernier laminage à chaud dans le domaine α + β ou β ne soit suivi d'aucune opération de trempe à partir de ce même domaine. En effet, il y aurait alors formation de βZr à chaud qui ferait perdre la texture lors de la trempe. On retomberait alors sur des produits présentant des caractéristiques non conformes à l'invention.

Après ce laminage à chaud et un recuit éventuel, le produit plat obtenu subit les recuits et laminages à froid habituels, les recuits n'ayant pas lieu à plus de 800°C.

Il n'est pas indispensable que le produit plat obtenu à la fin du traitement soit dans l'état entièrement recristallisé. La condition FT = 0,30 à 0,70, qui garantit une faible croissance sous irradiation dans la direction travers, peut être satisfaite même avec un produit plat à l'état détendu ou partiellement recristallisé si les conditions de l'invention sont respectées.

A titre d'exemple, une série d'essais a été réalisée sur un lingot d'alliage de zirconium ayant la composition (en pourcentages pondéraux) :

| | | |
|---|---|---|
| Nb = 0,95% | O = 1350ppm | Fe = 0,037% |
| Cr = 40ppm | S = 11-21ppm | C = 22ppm |
| N = 22ppm | Al = 12ppm | |

Sur ce lingot de diamètre 660mm ont été réalisés sept types de traitements thermomécaniques : quatre essais de référence (E1 et E4) et trois essais conformes à l'invention (E5 à E7), selon les indications du tableau 1.

Deux autres essais selon l'invention (E8 et E9) ont été réalisés sur un lingot de diamètre 660mm et de composition :
Nb = 2,50%
Fe = 0,05%
O = 1300ppm
Si = 50ppm.

Le tableau 1 décrit ces divers traitements.

**Tableau 1**

| | E1 référence | E2 référence | E3 référence | E4 référence | E5 invention | E6 invention | E7 invention | E8 invention | E9 invention |
|---|---|---|---|---|---|---|---|---|---|
| Forgeage du lingot | 900°c (α + β) épaisseur 200mm | | | | | | | 900°C (β) épaisseur 200mm | 1050°C (β) épaisseur 200mm |
| Forgeage de la brame | 900°c (α + β) épaisseur 100mm | | | | | | | 900°C (β) épaisseur 100mm | 780°C (α+β) épaisseur 100mm |
| Laminage à chaud | 945°c (α + β) épaisseur 30mm | | | | | | | 945°C (β) épaisseur 30mm | 945°C (β) épaisseur 20mm |
| Trempe β intermédiaire | Oui | | non | | | | | | oui |
| Laminage à chaud | 780°C, épaisseur 4,7mm | | 780°C épaisseur 4,7mm | 700°C épaisseur 4,7mm | 900°C épaisseur 4,7mm | 900°C épaisseur 4,7mm | 960°C épaisseur 4,7mm | 945°C épaisseur 4,7mm | 780°C épaisseur 6mm |
| Recuit continu | 700°C | | | | | | | | |
| N cycles de laminage à froid et recuit | Epaisseur 0,425mm | Epaisseur 0,6mm | | | | Epaisseur 0,425mm | | Epaisseur 2,0mm | Epaisseur 0,5mm |

Les textures des produits plats obtenus à la suite de ces essais ont été déterminées. On a obtenu les facteurs de Kearns FN, FT et FL figurant dans le tableau 2.

**Tableau 2**

| | Epaisseur (mm) | FN | FT | FL |
|---|---|---|---|---|
| Essai 1 (référence) | 0,425 | 0,687 | 0,230 | 0,082 |
| Essai 2 (référence) | 0,6 | 0,709 | 0,208 | 0,083 |
| Essai 3 (référence) | 0,6 | 0,649 | 0,270 | 0,082 |
| Essai 4 (référence) | 0,6 | 0,649 | 0,269 | 0,084 |
| Essai 5 (invention) | 0,6 | 0,627 | 0,300 | 0,073 |
| Essai 6 (invention) | 0,425 | 0,622 | 0,306 | 0,072 |
| Essai 7 (invention) | 0,425 | 0,594 | 0,339 | 0,068 |
| Essai 8 (invention) | 2,0 | 0,308 | 0,645 | 0,047 |
| Essai 9 (invention) | 0,5 | 0,576 | 0,375 | 0,050 |

Dans les essais de référence, on obtient comme d'habitude un accroissement de FN et une décroissance de FT lorsque l'épaisseur du produit plat décroît.

Les échantillons obtenus par le procédé selon l'invention présentent un facteur de Kearns FT significativement plus élevé que les échantillons de référence. Si FT se situe autour de la valeur 0,33 (d'où la limite inférieure de 0,30 pour le FT des tôles selon l'invention) et si une grille est fabriquée à partir d'une portion du produit plat qui a été découpée selon une orientation adéquate, il est possible d'assurer qu'au cours de son utilisation, cette grille ne présentera que de faibles variations de la section de ses cellules en l'absence de corrosion/oxydation et d'hydruration significatives. Si FT est plus franchement supérieur à 0,33, la tendance au rétrécissement sous irradiation qui en résulte permet de compenser la croissance sous irradiation résultant de la corrosion/oxydation et de l'hydruration de la grille lors de son utilisation dans des conditions prévues. On évitera ainsi à la fois les problèmes qui seraient liés à une croissance excessive de cette section sous irradiation (relâchement du serrage des crayons détériorant leur maintien) et les problèmes qui seraient liés à une réduction excessive de cette section sous irradiation (serrage trop important des crayons empêchant leur insertion et leur extraction).

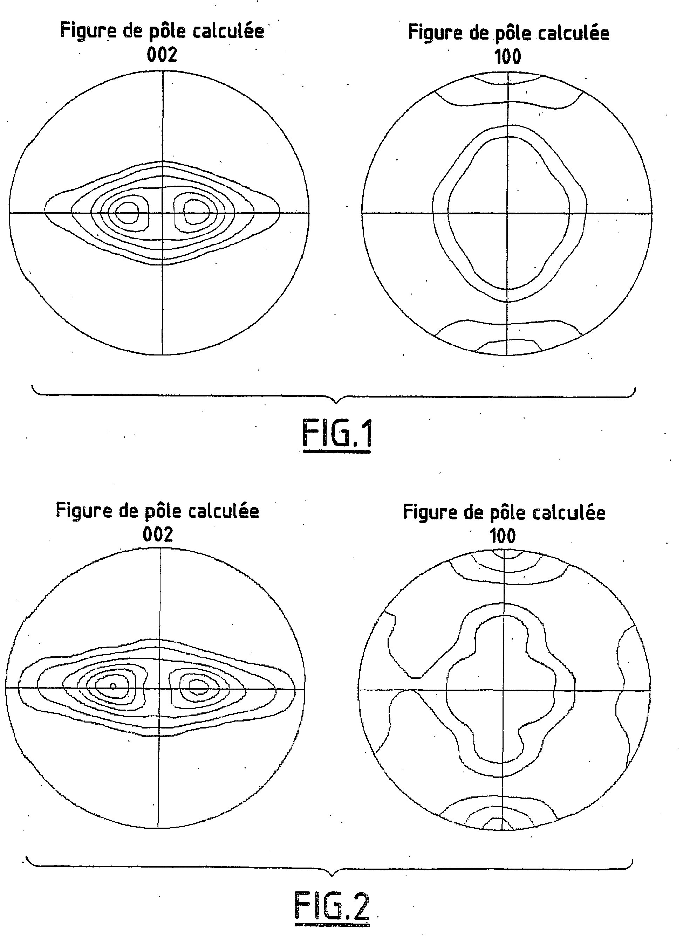

Un examen des figures de pôles d'un exemple d'échantillon obtenu par le procédé selon l'invention correspondant à l'essai E5 (figure 2), pour lequel la teneur en Nb est de l'ordre de 1% et le dernier laminage à chaud a eu lieu à 900°C, montre que les textures sont nettement plus transverses (FT élevé et FN bas) que celles d'un échantillon de référence de mêmes composition et épaisseur finale correspondant à l'essai E2 (figure 1) pour lequel le dernier laminage à chaud a été effectué à seulement 780°C.

On constate également que le caractère transverse de la texture croît avec la température du laminage à chaud, qui est donc l'un des paramètres, avec la composition de l'alliage, sur lesquels on peut jouer pour obtenir un FT de la valeur désirée.

Pour une température de laminage à chaud donnée (par exemple 960°C), ce caractère transverse de la texture est encore accentué lorsque la température du transus α + β → β est abaissée, par exemple pour les teneurs en Nb plus élevées, ce qui peut avoir pour effet que le dernier laminage à chaud a lieu dans le domaine β pur. C'est le cas pour l'essai 8 précédemment décrit, et dans une moindre mesure pour l'essai 9 pour lequel le dernier laminage à chaud a été effectué dans des conditions de réduction moins sévères et à une température de 780°C, donc dans le domaine α+β de l'alliage.

Du point de vue de la structure des échantillons, on ne constate pas de différence claire entre les produits de référence et les produits issus de l'invention après le laminage à chaud, à compositions et épaisseurs finales comparables.

Du point de vue des compositions des phases βZr et βNb et des précipités Zr(Nb, Fe)₂, on ne note pas non plus de différence sensible entre les essais de référence et les essais selon l'invention à composition de l'alliage comparable.

La résistance à la corrosion n'est pas, non plus, significativement affectée par l'utilisation du procédé selon l'invention.

A partir des produits plats selon l'invention, des grilles de maintien des crayons de réacteurs de centrales nucléaires sont fabriquées par les procédés habituels de mise en forme.

## Revendications

1. Procédé d'élaboration d'un produit plat en alliage de zirconium présentant un facteur de Kearns FT compris entre 0,30 et 0,70, **caractérisé en ce que** :
- on élabore un lingot d'alliage de zirconium de composition, en pourcentages pondéraux ;
- Nb = 0,5 à 3,5%
- Sn = 0 à 1,5%
- Fe = 0 à 0,5%
- Cr + V= 0 à 0,3%
- S = 0 à 100ppm
- 0 = 0 à 2000ppm
- Si = 0 à 150ppm
le reste étant du zirconium et des impuretés résultant de l'élaboration
- on met en forme ledit lingot
- on exécute un ou plusieurs laminages à chaud dudit lingot mis en forme, pour obtenir un produit plat, le dernier desdits laminages à chaud étant exécuté entre 820-(20 x Nb%) et 1100°C et n'étant suivi d'aucune opération de trempe
- on exécute éventuellement un recuit du produit plat à une température n'excédant pas 800°C ;
- on exécute un ou plusieurs cycles de laminage à froid et recuit du produit plat, lesdits recuits n'ayant pas lieu à plus de 800°C.

2. Procédé selon la revendication 1, **caractérisé en ce que** la teneur en Nb de l'alliage est de 0,5 à 1,5%.

3. Procédé selon l'une des revendications 1 ou 2, **caractérisé en ce que** ledit dernier laminage à chaud est exécuté à une température de ± 130°C autour de la température du transus α + β → β de l'alliage.

4. Procédé selon la revendication 3, **caractérisé en ce que** ledit dernier laminage à chaud est exécuté entre 900 et 1030°C.

5. Produit plat d'alliage de zirconium présentant un facteur de Kearns FT compris entre 0,30 et 0,70, **caractérisé en ce qu'**il est obtenu par le procédé selon l'une des revendications 1 à 4.

6. Grille de maintien des crayons de combustible dans un réacteur de centrale nucléaire à eau légère, **caractérisée en ce qu'**elle est obtenue par mise en forme d'un produit plat selon la revendication 5.

## Patentansprüche

1. Verfahren zum Herstellen eines flachen Produkts aus einer Zirkonlegierung, die einen Kearns-Faktor FT im Bereich von 0,30 bis 0,70 aufweist, **gekennzeichnet durch**:
- Herstellen eines Blocks aus einer Zirkonlegierung mit der folgenden Zusammensetzung in Gewichtsprozent:
- Nb = 0,5 bis 3,5 %
- Sn = 0 bis 1,5 %
- Fe = 0 bis 0,5 %
- Cr + V = 0 bis 0,3 %
- S = 0 bis 100 ppm
- O = 0 bis 2000 ppm
- Si = 0 bis 150 ppm
wobei der Rest durch Zirkonium und Verunreinigungen, die sich aus der Herstellung ergeben, gebildet ist,
- Formen des Blocks,
- Ausführen eines oder mehrerer Warmwalzen des geformten Blocks, um ein flaches Produkt zu erhalten, wobei das letzte Warmwalzen im Bereich von 820 - (20 x Nb %) bis 1100 °C ausgeführt wird und worauf keinerlei Abschreckoperation folgt,
- eventuell Ausführen eines erneuten Erhitzens des ebenen Produkts auf eine Temperatur, die 800 °C nicht überschreitet;
- Ausführen eines oder mehrerer Kaltwalzenzyklen und erneutes Erhitzen des ebenen Produkts, wobei das jeweilige erneute Erhitzen auf nicht mehr als 800 °C erfolgt.

2. Verfahren nach Anspruch 1, **dadurch gekennzeichnet, dass** der Anteil von Nb an der Legierung im Bereich von 0,5 bis 1,5 % liegt.

3. Verfahren nach einem der Ansprüche 1 oder 2, **dadurch gekennzeichnet, dass** das letzte Warmwalzen bei einer Temperatur im Bereich von ±130 °C um die Übergangstemperatur α + β → β der Legierung ausgeführt wird.

4. Verfahren nach Anspruch 3, **dadurch gekennzeichnet, dass** das letzte Warmwalzen im Bereich von 900 bis 1030 °C ausgeführt wird.

5. Flaches Produkt aus einer Zirkonlegierung, die einen Kearns-Faktor FT im Bereich von 0,30 bis 0,7 aufweist, **dadurch gekennzeichnet, dass** es durch das Verfahren nach einem der Ansprüche 1 bis 4 erhalten wird.

6. Gitter zum Halten von Brennstäben in einem Leichtwasser-Kernreaktor, **dadurch gekennzeichnet, dass** es durch Formen eines flachen Produkts nach Anspruch 5 erhalten wird.

## Claims

1. A process for producing a flat product made of a zirconium alloy having a Kearns factor FT of between 0.30 and 0.70, **characterized in that**:
- an ingot of zirconium alloy with the following composition, in percentages by weight, is smelted:
Nb = 0.5 to 3.5%
Sn = 0 to 1.5%
Fe = 0 to 0.5%
Cr + V = 0 to 0.3%
S = 0 to 100 ppm
O = 0 to 2000 ppm
Si = 0 to 150 ppm,
the balance being zirconium and impurities resulting from the smelting;
- said ingot is formed;
- said formed ingot undergoes one or more hot-rolling passes in order to obtain a flat product, the final of said hot-rolling passes being carried out between 820 - 20Nb% and 1100°C and not being followed by any quenching operation;
- optionally, said flat product undergoes an annealing operation at a temperature not exceeding 800°C; and
- the flat product undergoes one or more cold-rolling/annealing cycles, said annealing operations not taking place above 800°C.

2. The process as claimed in claim 1, **characterized in that** the Nb content of the alloy is from 0.5 to 1.5%.

3. The process as claimed in one of claims 1 or 2, **characterized in that** said final hot-rolling pass is carried out at a temperature within ± 130°C of the temperature at which the alloy undergoes the α + β → β transition.

4. The process as claimed in claim 3, **characterized in that** said final hot-rolling pass is carried out between 900 and 1030°C.

5. A flat product made of a zirconium alloy having a Kearns factor FT of between 0.30 and 0.70, **characterized in that** it is obtained by the process as claimed in one of claims 1 to 5.4

6. A spacer grid for retaining the fuel rods in a light-water nuclear power plant reactor, **characterized in that** it is obtained by the forming of a flat product as claimed in claim 5.
